Europäisches Patentamt

European Patent Office

Office européen des brevets

(11) Numéro de publication: **0 028 983**

**A1**

## (12) DEMANDE DE BREVET EUROPEEN

(21) Numéro de dépôt: **80401595.6**

(22) Date de dépôt: **07.11.80**

(51) Int. Cl.³: **B 27 F 7/15**
**B 23 K 37/02**

(30) Priorité: **09.11.79 FR 7927654**
**19.12.79 FR 7931054**

(43) Date de publication de la demande:
**20.05.81 Bulletin 81/20**

(84) Etats Contractants Désignés:
**DE GB NL SE**

(71) Demandeur: **Guislain, Jean-Marie**
**26, rue de Seine-Port**
**F-77240 Cesson Seine-et-Marne(FR)**

(72) Inventeur: **Guislain, Jean-Marie**
**26, rue de Seine-Port**
**F-77240 Cesson Seine-et-Marne(FR)**

(74) Mandataire: **Tony-Durand, Serge**
**Cabinet Tony-Durand 22, Boulevard Voltaire**
**F-75011 Paris(FR)**

(54) **Dispositif destiné à la fabrication de charpentes, notamment d'ossatures en bois.**

(57) Dispositif destiné à la fabrication de charpentes, notamment de fermettes par des connecteurs pourvus d'un ensemble de pointes, comportant une table-gabarit (1) pourvue d'un chemin de roulement (11) disposé au-dessous des rails (7), avec des parties terminales de liaison (13) semi-circulaires de façon à former un chemin continu, sur lequel est montée une presse hydraulique (2) comportant une armature articulée (23) dont l'une des extrémités supporte une pompe hydraulique (28), tandis que l'autre extrémité porte les mâchoires de serrage (31, 32) des connecteurs, cette presse étant orientable angulairement autour d'un axe vertical. Ce dispositif est considérablement moins encombrant et onéreux, à puissance équivalente, que les installations connues.

./...

EP 0 028 983 A1

Fig.3

<u>Dispositif destiné à la fabrication de charpentes, notamment d'ossatures en bois.</u>

La présente invention a pour objet un dispositif destiné à la fabrication de charpentes, notamment d'ossatures en bois telles que fermettes, par assemblage des parties constitutives de celles-ci au moyen de connecteurs pourvus de pointes, à la jonction des différentes parties des charpentes.

On connaît un certain nombre de dispositifs pour exécuter l'assemblage des parties constitutives des fermettes au moyen des connecteurs précités. Une première catégorie d'appareillages de ce genre est constituée par des ponts roulants munis de presses hydrauliques de très forte puissance, qui se déplacent au-dessus des fermettes à assembler. Dans une seconde catégorie de réalisations, les fermettes étant disposées sur un ensemble de supports appropriés, leur assemblage est obtenu par des presses hydrauliques suspendues à des rails, et qui se déplacent au-dessus des fermettes.

Un autre appareillage connu est constitué par un ensemble d'unités compactes, comportant chacune une table de support de la fermette et une presse hydraulique, chacune de ces unités étant disposée à un endroit approprié de la fermette pour effectuer la pose des connecteurs.

Les appareillages précités sont capables de développer la très grande puissance nécessaire pour exécuter la pose des connecteurs, mais en contrepartie ils sont extrêmement encombrants, complexes et onéreux.

On connaît également un dispositif plus léger et moins encombrant, constitué par la combinaison d'une table de support démontable et d'une presse hydraulique portative. La table comporte un rail de part et d'autre duquel on peut positionner des potences de support de la fermette en fonction des dimensions de celle-ci. Mais le fait que la presse hydraulique est portative limite nécessairement sa puissance, de sorte qu'en pratique cet appareillage ne permet pas d'assurer la pose des connecteurs dans un grand nombre de cas où il faut pouvoir disposer d'une puissance hydraulique suffisante.

L'invention a pour but de remédier à ces inconvénients en réalisant un appareillage qui soit à la fois peu encombrant et relativement peu onéreux, et d'un emploi souple tout en étant capable de développer la puissance hydraulique suffisante nécessaire à l'exécution de la pose des connecteurs adaptés aux différents types et dimensions de charpentes.

Le dispositif visé par l'invention, destiné à la fabrication de charpentes, notamment de fermettes par assemblage des parties constitutives de celles-ci, comporte une table-gabarit et une presse hydraulique adaptée pour enfoncer des connecteurs pourvus de pointes à la jonction des différentes parties des charpentes, la table-gabarit comprenant des rails horizontaux parallèles, reposant sur des colonnes, portant des traverses déplaçables transversalement sur ceux-ci, ces traverses étant aptes à supporter la charpente à assembler.

Conformément à l'invention, la presse hydraulique comprend un support articulé autour d'axes horizontaux sur un bâti mobile disposé sur le sol au voisinage de la table-gabarit, et qui porte une pompe hydraulique reliée par des canalisations appropriées à des mâchoires montées sur un vérin articulé à une extrémité du support et adaptées pour enfoncer les moyens de connexion dans la charpente.

De préférence, les deux voies latérales parallèles aux rails sont reliées à leurs extrémités par deux parties semi-circulaires, de façon à former un chemin de roulement continu pour la presse.

Les voies latérales du chemin de roulement sont reliées par des traverses sur le milieu desquelles prennent appui les colonnes de support des rails, de façon à former un ensemble rigide.

Dans ces conditions, la presse hydraulique est essentiellement logée au-dessous des traverses et des rails constituant la table proprement dite, au lieu d'être suspendue à un rail au-dessus de la table comme dans certaines réalisations connues. De ce fait, il devient possible de mettre en oeuvre une presse hydraulique de puissance largement supérieure à celle disponible sur les presses portatives, et ce sans pour autant entraîner la construction d'une installation de grandes dimensions, complexe et onéreuse. Corrélativement, le coût modéré du dispositif selon l'invention par rapport aux réalisations connues de grande puissance, met ce dispositif à la portée de petits entrepreneurs ou artisans qui ne disposent pas de moyens financiers suffisants pour s'équiper en installations onéreuses et encombrantes.

Suivant une autre forme de réalisation de l'invention, le support articulé supportant les éléments constitutifs de la presse hydraulique, est disposé sur une plate-forme de support montée sur des roues, destinée à être positionnée sous la charpente à assembler et déplacée le long de la table-gabarit lorsque le dispositif est en service.

Ainsi le système articulé portant la presse est monté sur un chariot, que l'opérateur peut déplacer et positionner à sa guise au-dessous de la charpente posée horizontalement sur la table-gabarit, pour exécuter les différentes opérations d'assemblage.

Cette forme de réalisation consiste donc à remplacer le chemin de roulement posé sur le sol autour de la table-gabarit par une plate-forme montée sur des roues, ce qui accroît la souplesse d'utilisation du dispositif et réduit encore son prix de revient.

D'autres particularités et avantages de l'invention apparaîtront au cours de la description qui va suivre. Aux dessins annexés, donnés à titre d'exemples non limitatifs, on a représenté plusieurs formes de réalisation du dispositif selon l'invention.

- La figure 1 est une vue en perspective avec arrachements, d'un mode de réalisation de la table-gabarit selon l'invention.

- La figure 2 est une vue de dessus en plan d'un premier dispositif selon l'invention, incluant la table-gabarit de la figure 1 et une presse hydraulique, une fermette étant placée en appui sur la table.

- La figure 3 est une vue en élévation en bout à échelle agrandie, du dispositif incluant la table-gabarit de la figure 1 et la presse hydraulique correspondante.

- La figure 4 est une vue de dessus en plan suivant IV-IV de la figure 3.

- La figure 5 est une vue de dessus en plan schématique analogue à la figure 2 illustrant un second mode de réalisation de la table-gabarit visée par l'invention.

- La figure 6 est une vue partielle en élévation d'une variante d'exécution de la presse hydraulique.

- La figure 7 est une vue en élévation latérale d'un autre mode de réalisation du dispositif conforme à l'invention.

- La figure 8 est une vue en plan de dessus du dispositif de la figure 7.

- La figure 9 est une vue en élévation d'une variante du dispositif de la figure 7.

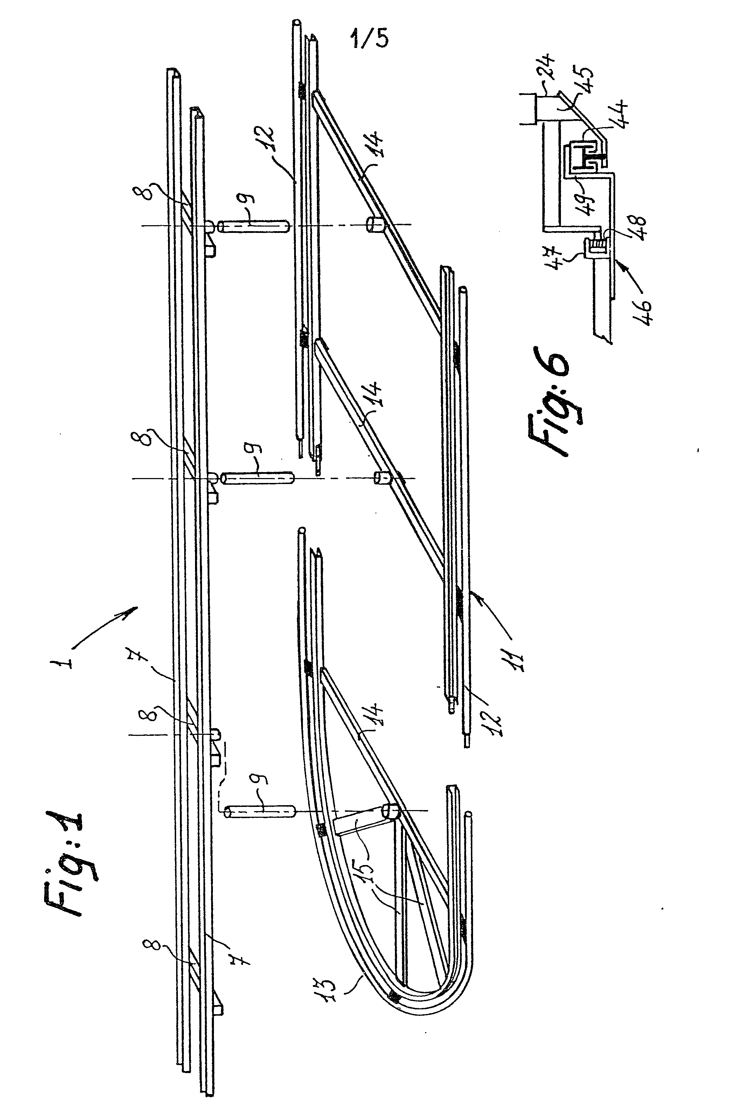

Le dispositif représenté aux figures 1 à 4 est destiné à la fabrication de charpentes et en particulier d'ossatures en bois telles que des fermettes, par assemblage des parties constitutives de celles-ci au moyen de connecteurs pourvus d'un ensemble de pointes, clouées à la jonction des différentes parties de la charpente.

Ce dispositif comprend essentiellement deux parties :

- une table-gabarit désignée dans son ensemble par la référence générale 1,

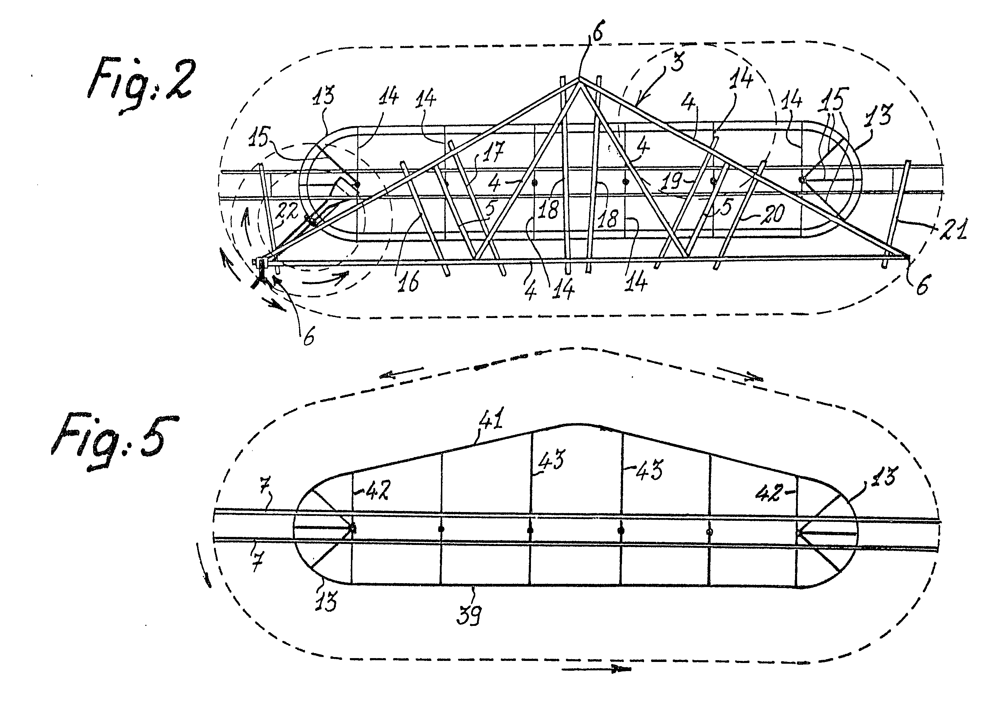

- et une presse hydraulique 2 adaptée pour enfoncer des connecteurs non représentés aux jonctions des pièces constitutives d'une fermette telle que 3 (figure 2).

La fermette 3 étant formée par l'assemblage en triangle de planches en bois (arbalétriers et entraits) 4 pourvues de traverses 5, le dispositif visé par l'invention a pour fonction d'exécuter la pose de connecteurs aux différents points de jonction entre les planches 4 et les traverses 5, par exemple aux sommets 6 de la fermette.

Ces connecteurs sont constitués de façon connue en soi par des plaques métalliques portant sur l'une de leur face un ensemble de pointes appropriées.

La table-gabarit 1 comprend deux rails horizontaux parallèles 7 à section en U dirigées vers le haut, réunis par des traverses 8 et reposant sur plusieurs colonnes verticales 9 par les traverses 8.

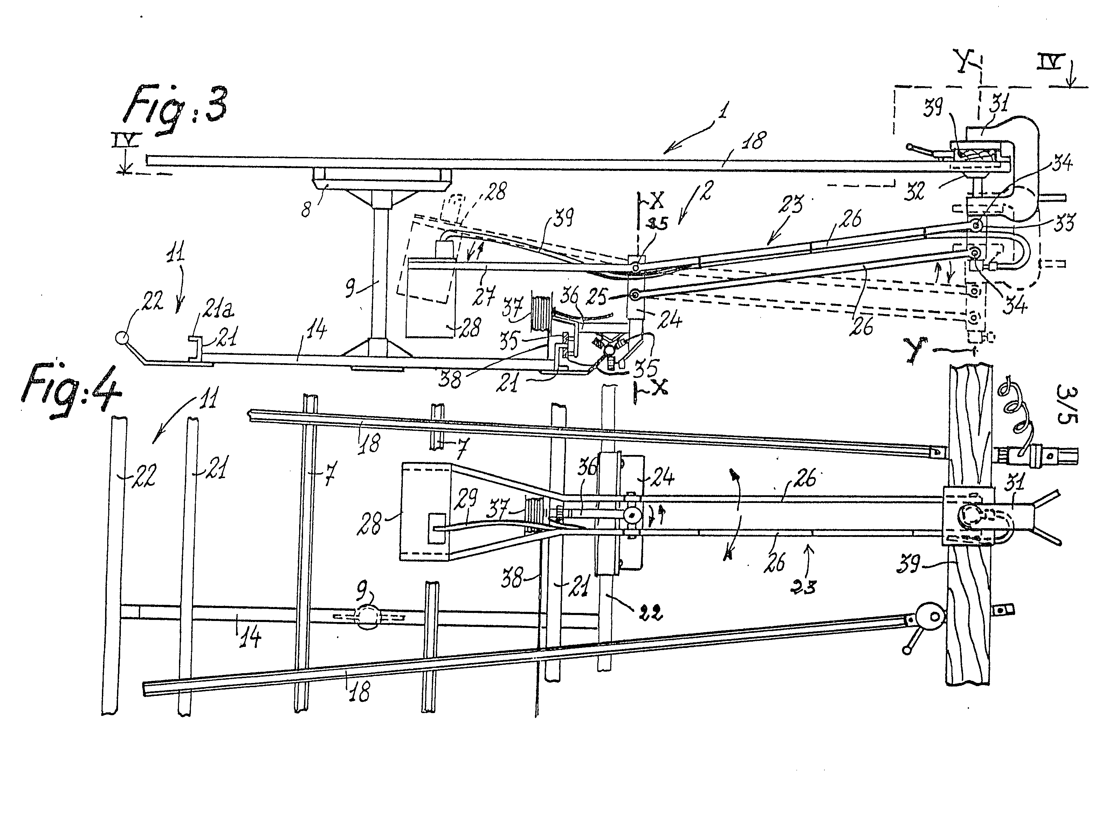

La presse hydraulique 2 (figures 3 et 4) est montée mobile sur le chemin de roulement 11, lequel est constitué comme on le voit à la figure 3, d'un rail intérieur 21 à section en U tournée vers l'extérieur, et d'une bande extérieure d'appui 22.

La presse 2 comprend un double parallélogramme 23 articulé sur un bâti 24 monté sur le chemin de roulement 11, autour d'axes horizontaux 25 parallèles aux rails 7. Chaque parallélogramme 23 comporte deux longues tiges 26 articulées à l'une de leurs extrémités autour des axes 25, la tige supérieure étant prolongée au-delà de son axe 25 et vers les colonnes centrales 9, par un bras 27. L'extrémité de ce dernier porte une pompe hydraulique 28 reliée par des canalisations appropriées 29 à un vérin 33 pourvu d'un piston 32 et supportant une mâchoire supérieure 31 en col de cygne. Le vérin 33 est articulé aux extrémités 34 des tiges 26, opposées aux axes de pivotement 25. La mâchoire supérieure 31 en col de cygne est montée rotative, de façon connue, autour d'un axe vertical Y-Y, afin de pouvoir être escamotée et positionnée convenablement par rapport à la fermette à assembler. Par ailleurs, le poids de l'unité hydraulique 28 et son bras de levier par rapport à l'axe de rotation 25 ainsi que le poids du vérin 33 et de la mâchoire 31 et le bras de levier de ces pièces, c'est-à-dire la longueur des tiges 26, sont déterminés de façon que l'unité hydraulique 28 fasse contrepoids aux éléments 33, 31, 32, compte tenu des bras de leviers respectifs. L'ensemble peut pivoter autour des axes 25 en prenant des positions intermédiaires entre celle représentée en traits mixtes et celle représentée en traits continus à la figure 3, et ce par simple pression manuelle de l'opérateur sur la mâchoire 31. De plus, la presse 2 peut pivoter autour d'un axe vertical X-X concourant aux axes 25.

Le bâti 24 repose sur le chemin de roulement 11 par l'intermédiaire de galets 35, qui enserrent la branche supérieure horizontale 21a du profilé 21 et la bande d'appui 22 ; ces galets sont portés par un bras latéral 36 fixé à la base du bâti 24.

La presse est pourvue d'un rouleau 37 placé au-dessus des galets 35 et du côté intérieur de la table-gabarit 1, une connexion électrique 38 d'alimentation de la presse venant s'enrouler sur ce rouleau 37 ou se dérouler, selon que l'on déplace l'ensemble de la presse 2 dans une direction ou dans l'autre sur le chemin de roulement 11.

Le dispositif qui vient d'être décrit fonctionne de la manière suivante.

On dispose tout d'abord sur les rails horizontaux 7 le nombre de traverses telles que 16, 17, 18.....22, appropriées aux dimensions de la fermette à assembler, avec l'orientation voulue par rapport aux rails 7 afin de pouvoir fournir un appui stable à la fermette 3, comme on le voit à la figure 2.

Puis l'opérateur déplace la presse hydraulique 2 sur le chemin de roulement 11 jusqu'à l'emplacement voulu où il doit poser un connecteur, par exemple à l'un des sommets 6, comme représenté à la figure 2. Grâce au chemin de roulement 11 supportant la presse 2 et au double parallélogramme articulé 23 portant à ses extrémités des poids qui s'équilibrent sensiblement compte tenu des bras de levier, cette manoeuvre ne demande pas d'efforts importants de la part de l'opérateur. Celui-ci fait alors pivoter la presse 2 autour de l'axe vertical X-X afin de placer la mâchoire 31 à l'endroit voulu, de façon à serrer entre elle et le piston 32 la zone 39 destinée à recevoir un connecteur (figure 3).

Une fois la mâchoire 31 positionnée l'opérateur déclenche le serrage en actionnant la pompe hydraulique 28. Les mâchoires 31, 32 enfoncent alors le connecteur sur la fermette avec la puissance voulue.

L'opérateur déplace ensuite l'ensemble de la presse 2 jusqu'à l'emplacement suivant, après avoir libéré les mâchoires de serrage 31, 32, tandis que le fil électrique d'alimentation 38 se déroule de son support 37.

L'opérateur peut ainsi effectuer l'ensemble des opérations de pose des connecteurs aux différents points voulus de la fermette 3, en déplaçant la presse 2 sur le chemin continu de roulement 11, comme visible à la figure 2.

Compte tenu des dimensions maximales des fermettes à assembler, la table-gabarit ainsi que la presse sont elles-mêmes dimensionnées de façon que les mâchoires de serrage puissent atteindre sans difficulté un point quelconque du pourtour de la fermette. Il est important de noter que l'ensemble de la presse 2 est monté rotativement autour de l'axe vertical X-X du support 24, ce qui la rend particulièrement maniable en lui permettant d'effectuer des révolutions complètes autour de cet axe, comme indiqué en traits interrompus sur la figure 2.

On peut ainsi atteindre aisément n'importe quel point de la périphérie de la fermette, en orientant angulairement la presse hydraulique 2 de façon convenable.

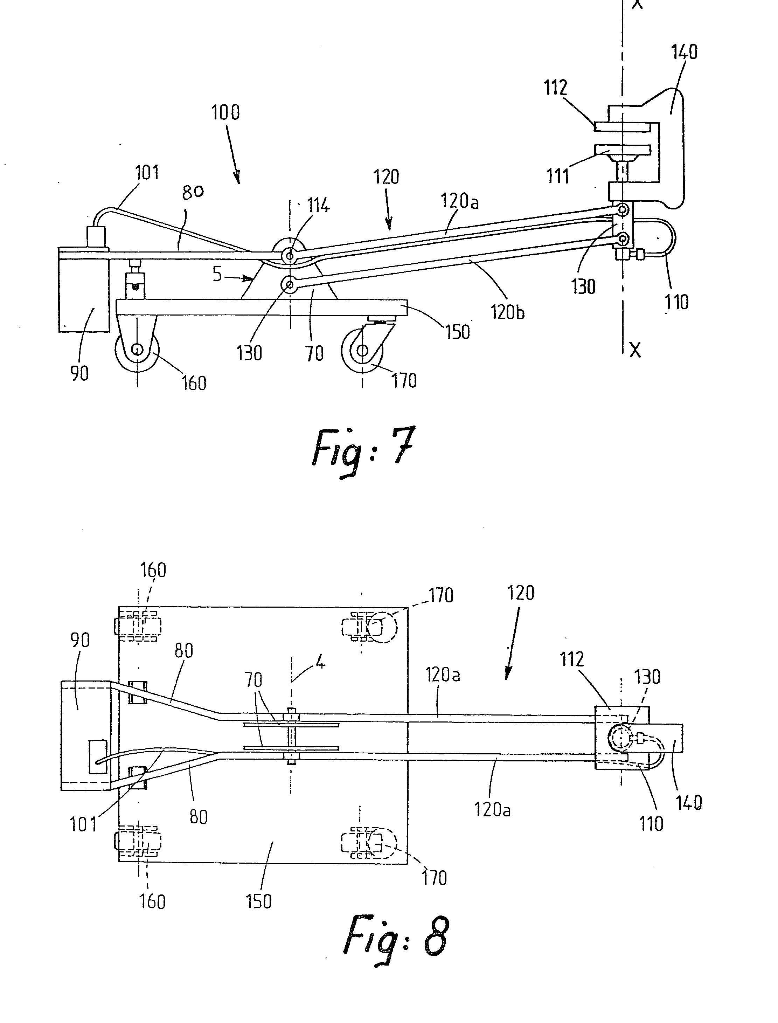

Dans le second mode de réalisation de la table-gabarit schématisée à la figure 5, les voies latérales 39, 41 du chemin de roulement, placées de part et d'autre des rails parallèles 7, ne sont plus parallèles comme dans le cas précédent : la voie 39 est bien parallèle aux rails 7, mais la voie 41 affecte une forme en V renversé très ouvert et à sommet arrondi, afin que l'ensemble de ce chemin de roulement 41, 39, pourvu de deux parties terminales semi-circulaires 13 de raccordement des extrémités des voies latérales, épouse sensiblement le contour d'une fermette. Dans ces conditions, la fermette ayant trois côtés en forme de triangle isocèle et étant placée en appui sur la table comme représenté à la figure 2, de façon que sa base soit parallèle aux deux rails 7, il devient possible de déplacer la presse hydraulique 2 en lui faisant suivre un trajet continu mieux adapté au contour de la fermette.

Bien entendu, les traverses de liaison entre les voies latérales 39, 41 présentent alors des longueurs différentes, allant en augmentant des traverses d'extrémités 42 jusqu'aux traverses centrales 43. Par ailleurs, la structure de la table-gabarit est identique à celle de la table illustrée à la figure 1.

La variante de réalisation présentée à la figure 6 montre un système d'alimentation électrique de l'ensemble hydraulique dans lequel les connexions électriques sont logées à l'intérieur d'un boîtier 44 solidaire de la base 45 du support 24.

Ce mode d'alimentation électrique est connu en soi et ne sera donc pas davantage décrit. Dans cette variante, on voit que le profilé intérieur de guidage 47 de la voie de roulement reçoit des galets 48 logés entre les deux branches horizontales du profilé 47, alors que dans la réalisation précédente, les deux galets 35 enserrent entre eux la branche supérieure du profilé. Ainsi, le poids de la presse est essentiellement supporté, dans cette variante par les galets 48, le guidage étant assuré par la coopération du profilé extérieur 49 et du boîtier 44 de connexion électrique.

Les avantages du dispositif conforme à l'invention sont les suivants.

Le fait de monter la presse hydraulique 2 sur un chemin de roulement placé autour de la table-gabarit permet d'obtenir la puissance de serrage nécessaire sans que le poids de la presse soit alors un obstacle, contrairement à la réalisation antérieure dans laquelle la presse est portative.

En effet, la structure en parallélogramme articulé dont les deux extrémités portent respectivement l'unité hydraulique de commande et les mâchoires de serrage, élimine pratiquement les difficultés dues au poids de l'installation, le parallélogramme étant dimensionné comme indiqué précédemment, de façon que les bras de levier respectifs de la pompe hydraulique 28 et des mâchoires de serrage ainsi que les poids de ses éléments permettent une manoeuvre aisée et sans effort important de la part de l'opérateur.

De plus, le fait de disposer le chemin de roulement de cette presse hydraulique sous la table proprement dite de support de la fermette, réduit l'encombrement de l'installation à un minimum par rapport aux installations antérieures.

Enfin, la structure en parallélogramme articulé de la presse, ainsi que son montage à pivotement autour d'un axe vertical concourant aux axes d'articulation du parallélogramme assure un emploi aisé du dispositif, la presse pouvant être orientée sans difficulté afin d'assurer un positionnement des mâchoires à l'endroit voulu pour la pose de connecteurs.

Le dispositif selon l'invention est par ailleurs considérablement moins onéreux que les installations de puissance équivalente connues jusqu'à présent, ce qui le met à portée d'artisans ou de petits entrepreneurs.

Dans le mode de réalisation des figures 7 et 8, la presse comporte un double parallélogramme 120 articulé autour d'axes horizontaux parallèles 114, 130 sur un bâti 5 déplaçable autour de la table-gabarit.

Le parallélogramme 120 est double,et est constitué d'une paire de tiges supérieures 120a, ainsi que d'une paire de tiges inférieures 120b, ces deux paires de tiges étant articulées respectivement autour des axes 114 et 130. Ces axes sont matérialisés par des tourillons tels que 60 pour l'axe supérieur 114, montés transversalement entre deux flasques 70 verticaux constitutifs du bâti 5.

Les côtés supérieurs 120a du double parallélogramme sont prolongés chacun par un bras 80 dont les extrémités portent une pompe hydraulique 90 reliée par des canalisations appropriées 101, 110 à des mâchoires 111,112 sur un vérin 130 articulé aux extrémités du double parallélogramme 120. La mâchoire inférieure 111 est constituée par un piston fixé à l'extrémité de la tige du vérin 130, tandis que la mâchoire supérieure 112 est fixée au sommet d'un montant 140 en col de cygne, l'ensemble constitué par le vérin 130 et le col de cygne 140 étant rotatif autour d'un axe vertical X-X.

Ainsi les mâchoires 111, 112 peuvent pivoter d'une part autour des axes horizontaux 114, 130 par l'intermédiaire du parallélogramme articulé, et d'autre part autour de l'axe vertical X-X, ce qui permet de les positionner à la hauteur et à l'endroit voulus.

Le parallélogramme articulé 120 est disposé sur une plate-forme 150 montée sur des roues 160, 170, destinée à être positionnée sous la charpente à assembler et déplacée le long de la table-gabarit lorsque le dispositif est en service.

Dans l'exemple décrit, les roues 160, 170 sont au nombre de quatre, à savoir deux roues 160 non orientables, du côté de la pompe 90 et deux roues directionnelles orientables 170, placées du côté du vérin 13 et des mâchoires 110, 120.

L'opérateur peut donc aisément déplacer sous la charpente et autour de la table-gabarit le chariot 150 et la presse hydraulique (2, 9, 13, 14) montée sur celui-ci pour amener la presse aux emplacements successifs voulus afin d'exécuter les opérations de pose des connecteurs sur la charpente, et ce sans effort important. Cet appareil est placé au-dessous de la charpente à assembler, et peut être déplacé tout autour de celle-ci et de sa table-gabarit de support.

Mais ce dispositif est plus souple que ceux des figures 1 à 6, le chemin de roulement prévu dans ceux-ci étant ici remplacé par la plate-forme 150 montée sur les roues 160, 170.

Corrélativement, l'appareil selon les figures 7 et 8 est encore moins onéreux que les précédents, tout en étant capable d'assurer les mêmes performances.

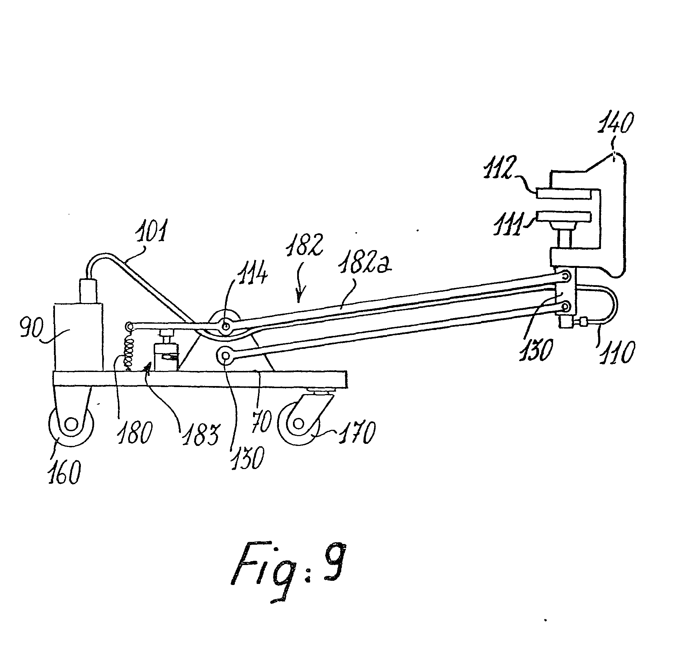

Le mode de réalisation illustré à la figure 9 diffère de celui des figures 5 et 6 par le fait que la pompe hydraulique 90 repose sur la plate-forme 150, et n'assure donc plus l'équilibrage du double parallélogramme. Cet équilibrage est ici assuré par un ressort 180 dont une extrémité est fixée à la plate-forme 150 et l'autre à la partie terminale 181 des côtés supérieurs 182a du double parallélogramme 182. Un amortisseur 183 dont le piston est solidaire de la partie terminale 181 amortit les oscillations du double parallélogramme.

L'invention n'est pas limitée aux formes de réalisation décrites et peut comporter des variantes d'exécution. Ainsi, une roue 170 pourrait être orientable, et les roues peuvent être en nombre variable, par exemple trois au lieu de quatre, avec une roue orientable. De même, le double parallélogramme articulé 120 pourrait être remplacé par une seule tige suffisamment solide, prolongée par un bras de support de la pompe hydraulique 90, et articulée d'une part sur le bâti de support 5, et d'autre part sur le vérin hydraulique 130.

Il est également possible de remplacer le double parallélogramme par un simple parallélogramme, à condition qu'il soit suffisamment solide, et le chemin de roulement peut être réalisé de façon quelconque.

Le dispositif selon l'invention peut être utilisé non seulement pour assembler des ossatures en bois par clouage, mais aussi des charpentes métalliques au moyen de pièces de connexion appropriées telles que des rivets.

REVENDICATIONS

1 - Dispositif destiné notamment à la fabrication de charpentes, par exemple d'ossatures en bois par assemblage des parties constitutives de celles-ci, comportant une table-gabarit et une presse hydraulique adaptée pour enfoncer des connecteurs pourvus de pointes ou autres moyens de connexion approriés à la jonction des différentes parties des charpentes, la table-gabarit comprenant des rails horizontaux parallèles, reposant sur des colonnes, portant des traverses déplaçables sur ceux-ci, et aptes à supporter la charpente à assembler, caractérisé en ce que la presse hydraulique comprend un support articulé autour d'axes horizontaux sur un bâti mobile disposé sur le sol au voisinage de la table-gabarit, et qui porte une pompe hydraulique reliée par des canalisations appropriées à des mâchoires montées sur un vérin articulé à une extrémité du support et adaptées pour enfoncer les moyens de connexion dans la charpente.

2 - Dispositif selon la revendication 1, caractérisé en ce que le support de la pompe et du vérin est constitué d'un double parallélogramme articulé à l'une de ses extrémités autour des axes horizontaux précités du bâti mobile, et dont les extrémités opposées portent le vérin et les mâchoires correspondantes, lesquels sont montés à pivotement autour d'un axe vertical sur lesdites extrémités du double parallélogramme, un bras porteur de la pompe s'étendant vers la table-gabarit au-delà des axes horizontaux de pivotement de la presse, et des moyens d'équilibrage, par exemple la pompe, faisant contrepoids d'équilibrage au vérin et aux mâchoires de serrage.

3 - Dispositif selon la revendication 2, caractérisé en ce que la table-gabarit est pourvue d'un chemin de roulement disposé au-dessous des rails et de chaque côté de ceux-ci sur le sol, avec au moins une partie terminale assurant la liaison entre les deux voies latérales de ce chemin de roulement, et en ce que la presse hydraulique est montée mobile sur ce chemin de roulement, lequel ainsi que la presse sont agencés pour permettre un déplacement de la presse sur tout le pourtour de la table afin que la presse puisse exécuter convenablement la pose des connecteurs des parties constitutives de la charpente aux endroits voulus.

4 - Dispositif selon la revendication 3, caractérisé en ce que les deux voies parallèles du chemin de roulement sont reliées par des traverses sur le milieu desquelles prennent appui les colonnes de support des rails, les deux voies latérales de roulement étant de préférence reliées par deux parties terminales incurvées assurant un chemin de roulement continu sur le pourtour de la charpente.

5 - Dispositif selon la revendication 4, caractérisé en ce que la presse est montée à pivotement autour d'un axe vertical situé sensiblement dans le même plan que les axes d'articulation du double parallélogramme.

6 - Dispositif selon l'une des revendications 3 et 4, caractérisé en ce que les voies latérales du chemin de roulement de la presse sont approximativement adaptées au contour triangulaire des charpentes à assembler, l'une des voies étant à cet effet conformée en V largement ouvert.

7 - Dispositif selon la revendication 2, caractérisé en ce que le parallélogramme articulé supportant le vérin hydraulique et la pompe hydraulique est monté sur une plate-forme reposant sur des roues, dont au moins une est orientable, cette plate-forme mobile étant destinée à être positionnée sous la charpente à assembler et déplacée le long de la table-gabarit lorsque le dispositif est en service.

8 - Dispositif selon la revendication 1 dans lequel le support est constitué d'un double parallélogramme articulé à l'une de ses extrémités autour des axes horizontaux précités sur le bâti mobile, tandis que son extrémité opposée porte le vérin et les mâchoires de serrage, caractérisé en ce qu'au moins l'une des roues de support de la plate-forme supportant le bâti et la presse est orientable.

9 - Dispositif selon l'une des revendications 7 et 8, caractérisé en ce que la pompe hydraulique est montée sur la plate-forme, et un ressort, dont une extrémité est fixée à la plate-forme et l'autre à la partie terminale des côtés supérieurs du parallélogramme, assure l'équilibrage de ce dernier.

10- Application du dispositif selon l'une des revendications 1 à 9, à la soudure par points de pièces métalliques reposant sur la table-gabarit, la pompe hydraulique et le vérin étant remplacés respectivement par un contrepoids et par une machine de soudage par points.

Fig:1

Fig:6

0028983

1/5

Fig.2

Fig.5

0028983

Fig:3

Fig:4

0028983

Fig: 7

Fig: 8

Fig:9

**0028983**

Numéro de la demande

**Office européen
des brevets**

# RAPPORT DE RECHERCHE EUROPEENNE

EP 80 40 1595

| | DOCUMENTS CONSIDERES COMME PERTINENTS | | CLASSEMENT DE LA DEMANDE (Int. Cl. 3) |
|---|---|---|---|
| Catégorie | Citation du document avec indication, en cas de besoin, des parties pertinentes | Revendication concernée | |
| | US - A - 3 866 530 (MOEHLENPAH)<br>  * Colonne 4, lignes 33-57;<br>    colonne 7, lignes 27-39 *<br>             -- | 1,3 | B 27 F  7/15<br>B 23 K 37/02 |
| | FR - A - 2 206 159 (MOEHLENPAH)<br>  * Page 9, lignes 1-16 *<br>             -- | 1 | |
| | US - A - 3 358 589 (HENTZSCHEL)<br>  * Colonne 4, lignes 41-48 *<br>             -- | 7,8 | **DOMAINES TECHNIQUES RECHERCHES (Int. Cl. 3)** |
| | US - A - 4 111 114 (CAR)<br><br>FR - A - 2 090 015 (BEVES)<br>             ---- | | B 27 F  7/00<br>B 23 K 37/00<br>          11/00<br>B 23 Q  1/00 |

**CATEGORIE DES DOCUMENTS CITES**

X: particulièrement pertinent

A: arrière-plan technologique

O: divulgation non-écrite

P: document intercalaire

T: théorie ou principe à la base
   de l'invention

E: demande faisant interférence

D: document cité dans
   la demande

L: document cité pour d'autres
   raisons

&: membre de la même famille,
document correspondant

Le présent rapport de recherche a été établi pour toutes les revendications

| Lieu de la recherche | Date d'achèvement de la recherche | Examinateur |
|---|---|---|
| La Haye | 10-02-1981 | DE GUSSEM |

OEB Form 1503.1  06.78